# EUROPÄISCHE PATENTSCHRIFT

(11) **EP 2 447 104 B1**
(45) Veröffentlichungstag und Bekanntmachung des Hinweises auf die Patenterteilung: **13.12.2017**
(21) Anmeldenummer: 11183411.5
(22) Anmeldetag: 30.09.2011
(51) Int. Cl.: B62D 5/04, B66F 9/24, B66F 9/075, H02P 29/02, B60L 1/00

(54) **Verfahren zur Steuerung einer elektrischen Drehfeldmaschine einer mobilen Arbeitsmaschine**
Method for controlling an electric revolving field machine of a mobile work machine
Procédé de commande d'un générateur à champ tournant électrique d'une machine de travail mobile

(30) Priorität: 21.10.2010 DE 102010049169
(43) Veröffentlichungstag der Anmeldung: 02.05.2012
(73) Patentinhaber: STILL GmbH, 22113 Hamburg (DE)
(72) Erfinder: Rudolph, Christian, Dr., 21075 Hamburg (DE); Wang, Jianqi, Dr., 22143 Hamburg (DE)
(74) Vertreter: Patentship Patentanwaltsgesellschaft mbH

(56) Entgegenhaltungen:
- WO-A1-2004/107555
- DE-A1-102007 019 114
- DE-A1-102010 012 887
- US-A1- 2007 007 080

## Beschreibung

Die Erfindung betrifft ein Verfahren zur Steuerung einer elektrischen Drehfeldmaschine einer mobilen Arbeitsmaschine. Insbesondere betrifft die Erfindung ein Verfahren zur Steuerung einer Drehfeldmaschine einer mobilen Arbeitsmaschine, mit einer Drehfeldmaschine, insbesondere einem Drehstrommotor, und einer Drehzahlerfassung der Drehfeldmaschine, einem steuerbaren Wechselrichter für die Speisung der Drehfeldmaschine und mit einem Steuerungsrechner, der mit dem Wechselrichter sowie der Drehzahlerfassung verbunden ist, wobei ein Überwachungsrechner, der mit dem Steuerungsrechner über einen Datenbus verbunden ist, als berechneten Überwachungswert zumindest eine Überwachungsdrehzahl der Drehfeldmaschine mittels einer Modellrechnung aus an den Überwachungsrechner übermittelten Eingangswerten bestimmt.

Bekannt ist, die Regelung und insbesondere die Drehzahlregelung von elektrischen Antrieben mobiler Arbeitsmaschinen, wie etwa von Flurförderzeugen, zu überwachen. Solche elektrischen Antriebe können zum einen der Fahrantrieb zum Bewegen der mobilen Arbeitsmaschine als Ganzes, aber auch jede Art von Stellantrieb, wie etwa eine elektrische Lenkung, oder ein Antrieb einer Arbeitsvorrichtung, wie etwa einer Hubvorrichtung sein. Die Regelungsüberwachung ist notwendig, um Anforderungen an die Gefahrvermeidung bzw. die Risikominimierung beim Betrieb der mobilen Arbeitsmaschinen zu erfüllen. Bei Drehstromantrieben von beispielsweise Flurförderzeugen, wie zum Beispiel von Gegengewichtsstaplern, ist hierzu bekannt, diese Anforderungen unter anderem durch eine redundante Auswertung eines Drehzahlsignals des Antriebes mit anschließender Berechnung bestimmter Zwischengrößen des Drehzahlregelkreises, wie beispielsweise des Solldrehmoments, zu lösen. Diese Zwischengrößen werden von einem Überwachungsrechner, zum Beispiel einem Mikrorechner, mit korrespondierenden Größen eines regelnden Steuerungsrechners verglichen. Dabei erhält der Überwachungsrechner das Signal des Drehzahlsensors über eine eigene Signalleitung. Gleichzeitig sind der Überwachungsrechner, der Steuerungsrechner und auch weitere Komponenten der mobilen Arbeitsmaschine zumeist durch einen Datenbus miteinander verbunden, wie z.B. das Feldbussystem CAN, das im Fahrzeugbau weitgehend Einsatz findet.

Nachteilig an einer nur in Bezug auf die Auswertung eines Drehzahlsignals redundanten Auslegung der Überwachung ist, dass kein Ausfall des Drehzahlsensors selbst erfasst werden kann. Es kann im Fall der einfachen redundanten Drehzahlerfassung keine vollständige Überprüfung des durch den regelnden Mikrorechner berechneten Regelmodells der Maschine erfolgen, sondern nur eine Überwachung der Drehzahlauswertung. Auch ist zusätzlicher Aufwand für die zusätzliche Signalleitung zwischen Drehzahlsensor und Überwachungsrechner erforderlich.

Für einen elektrischen Antrieb kommen Drehstrommotoren und wegen des einfachen Aufbaus mit einem Kurzschlussläufer insbesondere Drehstrom-Asynchronmotoren zum Einsatz. Der Drehstrom-Asynchronmotor wird dabei über einen Wechselrichter gespeist und kann in einem großen Drehmoment- und Drehzahlbereich geregelt werden. Für die Regelung des Drehstrom-Asynchronmotors ist eine feldorientierte Regelung bekannt, bei der für die Regelung des Drehmoments die Kenntnis des Betrages und der Richtung des magnetischen Flussvektors erforderlich ist. Um diesen Flussvektor bestimmen zu können, wird der Messwert des Drehzahlsensors eingesetzt und die gemessene Motordrehzahl als wesentliche Größe verwendet, um mithilfe einer Modellrechnung des Verhaltens des Asynchron-Drehstrommotors den Flussvektor zu bestimmen.

Eine weitere bekannte Lösung zur Regelungsüberwachung wertet zusätzlich Statorspannungssensoren aus. Dadurch können durch den Überwachungsrechner neben den Regelgrößen, wie etwa der Drehzahl, auch Modell-Maschinengrößen des Antriebs anhand eines Maschinenmodells berechnet werden.

Nachteilig an dem dargestellten Stand der Technik ist der zur Überwachung erforderliche Hardwareaufwand aufgrund zusätzlicher Leitungen, sowie die erforderlichen Analog-Digital-Wandlerkanäle und Filterschaltungen, um die Statorspannungen zu bestimmen. Im Fall, dass eine Potentialtrennung vorgesehen werden muss, ist die Spannungssensorik besonders aufwendig. Wenn die Auswertung von Stromsignalen der Statorstromkreise und/oder von Spannungssignalen der Statorstromkreise nicht erfolgt, tritt als weiterer Nachteil noch eine vergleichsweise geringe Überwachungstiefe des geregelten Antriebs hinzu. Grundsätzlich ist nachteilig, dass alle Sensorsignale direkt an den zusätzlichen Überwachungsrechner geleitet und durch diesen ausgewertet werden müssen. Selbst im einfachsten Fall muss zumindest das Signal des Drehzahlsensors oder alternativ eines Drehgebers als Lage- bzw. Positionssensor an diesen geleitet werden. In dem einfachen Fall der redundanten Drehzahlerfassung erfolgt keine vollständige Überprüfung des durch den Steuerungsrechner berechneten Regelmodells des Antriebs bzw. des Drehstrommotors oder allgemeiner der Drehfeldmaschine, sondern nur die Überwachung der Drehzahlauswertung durch den Steuerungsrechner.
Werden Spannungssignale erfasst, sei es in Form pulsweitenmodulierter Sollsignale oder mittels Phasenspannungssensoren, steigt der Aufwand für die Übertragung durch zusätzliche Leitungen und die Auswertung dieser Signale stark an, um dadurch das der Regelung des Steuerungsrechners zugrunde liegende Maschinenmodell durch den Überwachungsrechner im Rahmen der Überwachung zu bestimmen.

Aus der nachveröffentlichten DE 10 2010 012 887 A1 ist ein Verfahren zur Steuerung eines elektrischen Antriebs einer Komponente einer mobilen Arbeitsmaschine bekannt, bei dem ein Drehstrommotor des Antriebs mit einer unter Verwendung des Signals eines Drehzahlsensors bestimmten Istdrehzahl feldorientiert durch eine Steuervorrichtung geregelt wird. Gleichzeitig und/oder für kurze Kontrolizeiträume bestimmt die Steuervorrichtung anhand einer Modellrechnung des Betriebsverhaltens des Drehstrommotors die Drehzahl des Drehstrommotors unabhängig von dem Signal des Drehzahlsensors als Kontrolldrehzahl und stellt bei einer Abweichung der Kontrolldrehzahl von der Istdrehzahl größer als ein festgelegter Toleranzwert einen Fehler des Drehzahlsensors fest.

Aus der US 2007/0007080 A1 ist ein Flurförderzeug mit einer elektronischen Steuerung für Fahrfunktionen und/oder Hubfunktionen des Flurförderzeugs bekannt.

Der vorliegenden Erfindung liegt die Aufgabe zugrunde, ein Verfahren zur Steuerung einer Drehfeldmaschine einer mobilen Arbeitsmaschine, wie etwa eines Antriebes, insbesondere zur Überwachung einer Drehzahlregelung, zur Verfügung zu stellen, mit dem Fehler erkannt werden und die Betriebssicherheit erhöht wird.

Die Aufgabe wird durch ein Verfahren zur Steuerung einer Drehfeldmaschine einer mobilen Arbeitsmaschine mit den Merkmalen des unabhängigen Anspruchs 1 sowie eine Steuerungsvorrichtung mit Drehfeldmaschine einer mobilen Arbeitsmaschine mit den Merkmalen des unabhängigen Anspruchs 15 gelöst. Vorteilhafte Weiterbildungen werden in den Unteransprüchen angegeben.

Die Aufgabe wird erfindungsgemäß dadurch gelöst, dass bei einem Verfahren zur Steuerung einer Drehfeldmaschine einer mobilen Arbeitsmaschine, mit einer Drehfeldmaschine, insbesondere einem Drehstrommotor, und einer Drehzahlerfassung der Drehfeldmaschine, einem steuerbaren Wechselrichter für die Speisung der Drehfeldmaschine und mit einem Steuerungsrechner, der mit dem Wechselrichter sowie der Drehzahlerfassung verbunden ist, ein Überwachungsrechner, der mit dem Steuerungsrechner über einen Datenbus verbunden ist, als berechneten Überwachungswert zumindest eine Überwachungsdrehzahl der Drehfeldmaschine mittels einer Modellrechnung aus an den Überwachungsrechner übermittelten Eingangswerten bestimmt. Vorteilhaft erhält der Überwachungsrechner Eingangswerte über den Datenbus allein als Dateninformation von dem Steuerungsrechner und vergleicht berechnete Überwachungswerte mit den über Datenbus übermittelten Eingangswerten, wobei der Steuerungsrechner und der Überwachungsrechner in verschiedenen Kernen eines Mehrkernprozessors umgesetzt sind sowie der Bus ein CPU-Bus ist oder wobei der Überwachungsrechner zugleich ein Steuerungsrechner einer weiteren Komponente der mobilen Arbeitsmaschine oder des Wechselrichters ist.

Vorteilhaft kann durch das erfindungsgemäße Verfahren die Anzahl der Bauteile verringert werden, da etwa die zusätzlichen Signalleitungen, die die gemessenen Sensordaten als Eingangswerte, z.B. die gemessene Drehzahl eines Drehzahlsensors oder die Phasenströme/Phasenspannungen der Statorwicklungen der Drehfeldmaschine, an den Überwachungsrechner übermitteln, entfallen können. Diese Eingangswerte werden allein als Dateninformation über den Datenbus übertragen. Da das Bussystem bei modernen Fahrzeugen bereits vorhanden ist und alle Steuerungsrechner sowie elektronischen Komponenten verbindet, ergibt sich eine Vereinfachung der Hardware zur Überwachung, da das ohnehin vorhandene Bussystem mitgenutzt wird. Vorteilhaft ergibt sich auch eine Vereinfachung der Überwachung der Drehzahlregelung. Die Eingangswerte für die Berechnung eines Maschinenmodells zur Überwachung stehen als digitale Signale auf dem Datenbus zur Verfügung. Das Maschinenmodell wird, genauso wie in dem Fall der aufwendigen Realisierung mittels Rückführung von pulsweitenmodulierten Sollsignalen oder Spannungssensoren sowie doppelter Drehgeberauswertung und Übertragung dieser Werte über Signalleitungen, vollständig berechnet. Dies ergibt eine Überwachung des der Regelung zugrunde liegenden Maschinenmodells in erforderlicher Tiefe. Es ergibt sich ein erhöhter Sicherheitsstandard, da das gesamte Maschinenmodell redundant vom Überwachungsrechner berechnet wird. Durch das erfindungsgemäße Verfahren können Fehler bei der Stromsensorik erkannt werden. Fehler in der Treiberschaltung der Leistungshalbleiter und bei den Leistungshalbleitern selbst können erfasst werden. Dabei kann die Drehfeldmaschine nicht nur ein Drehstrommotor eines Fahrantriebes oder eines sonstigen Antriebs, wie etwa der für die Pumpe einer Arbeitshydraulik sein, sondern auch ein Generator, der mit einem Verbrennungsmotor verbunden ist, in einer mobilen Arbeitsmaschine mit einem verbrennungsmotorelektrischen Antrieb. Die Algorithmen des Überwachungsrechners zur Überwachung können auch auf einem einzigen Mehrkernprozessor unabhängig von den Algorithmen des Steuerungsrechners auf einem weiteren Prozessorkern durch den Mehrkernprozessor berechnet werden. Dies ergibt einen vorteilhaft kompakten Aufbau. Die Algorithmen zur Überwachung können alternativ auch auf einem einzigen Rechner zusammen mit den Algorithmen des Steuerungsrechners berechnet werden. Hierbei sollten für die Überwachungs-Algorithmen und deren Berechnung andere RAM-/ROM-Speicherbereiche als für die Berechnung des für die Regelung erforderlichen Maschinenmodells verwendet werden. Der Überwachungsrechner kann ein zusätzlicher Rechner sein, der ein Bestandteil der Signalelektronik des Wechselrichters ist und mit dem Steuerungsrechner über ein lokales Bussystem verbunden ist. Alternativ kann auch jeder andere Steuerungsrechner in einem Steuergerät oder Aggregat genutzt werden, der über einen Feldbus mit dem Steuerungsrechner verbunden ist.

In günstiger Ausführungsform ist der Datenbus ein Feldbus, insbesondere ein CAN-Bus.

Solche Bussysteme werden in großem Umfang bei Fahrzeugen eingesetzt und stehen zumeist schon zur Verfügung.

In günstiger Ausgestaltung besteht die Drehzahlerfassung aus einem die Drehzahl der Drehfeldmaschine erfassenden Drehzahlsensor.

In dieser Ausführung kann durch das erfindungsgemäße Verfahren insbesondere die Funktion dieses Drehzahlsensors überwacht werden und ein Ausfall des Drehzahlsensors erkannt werden.

Vorteilhaft besteht die Drehzahlerfassung aus dem Steuerungsrechner, der die Drehzahl der Drehfeldmaschine anhand eines sensorlosen Regelungsmodels bestimmt und als Eingangswert an den Überwachungsrechner übermittelt.

Auch bei drehzahlsensorlosen und somit insgesamt sensorlosen feldorientierten Regelungen kann dadurch eine vollständig redundante Überwachung der Regelung erreicht werden.

In günstiger Ausgestaltung umfassen die Eingangswerte einen oder mehrere Statorströme der Drehfeldmaschine, insbesondere die Statorströme von zwei von drei Phasen der Drehfeldmaschine.

In einer erfindungsgemäßen Ausgestaltung werden als Eingangswerte Statorspannungen der Drehfeldmaschine verwendet, die aus einem oder mehreren Statorspannungssensoren bestimmt werden.

Als Eingangswerte können Statorspannungen der Drehfeldmaschine verwendet werden, die aus einem Messwert eines Spannungssensors für die Eingangsspannung des Wechselrichters berechnet werden.

Dadurch lassen sich Motorspannungssensoren vermeiden, da Spannungs-Sollwerte oder bei erhöhtem Genauigkeitsbedarf kompensierte Spannungs-Sollwerte verwendet werden können.

In vorteilhafter Ausgestaltung ist die Drehfeldmaschine ein Asynchron-Drehstrommotor.

In günstiger Ausgestaltung des erfindungsgemäßen Verfahrens führt der Steuerungsrechner eine feldorientierte Regelung der Drehfeldmaschine durch.

Der Überwachungsrechner kann als Modellrechnung das Modell einer feldorientierten Regelung der Drehfeldmaschine nutzen.

Zumindest ein Teil der Eingangswerte des Überwachungsrechners kann eine geringere Abtastrate haben als entsprechende Werte für den Steuerungsrechner.

Da der Überwachungsrechner nicht die tatsächliche Regelung der Drehfeldmaschine durchführt, ist die eventuell nicht ausreichend schnell in Echtzeit gegebene oder nicht genau genug aufgelöste Übertragung der Eingangswerte über den Datenbus nicht kritisch. Soweit die erlaubten Toleranzwerte der durch den Überwachungsrechner berechneten Überwachungswerte beim Vergleich mit den als Eingangswert übermittelten Werten nicht überschritten werden, wird kein Fehler erkannt. Wenn folglich die Toleranzwerte an die Schnelligkeit und Genauigkeit der Übermittlung der Eingangswerte angepasst sind, ist die Übertragung über den Datenbus in jedem Fall ausreichend.

In einer günstigen Ausgestaltung der Erfindung werden in einem Drehzahlbereich nahe Null Testsignale auf die Statorwicklungen aufgeschaltet, insbesondere bei einer zweipoligen Asynchrondrehstrommaschine als Drehfeldmaschine.

In dem Betriebsbereich um Null Hertz kann bei einer Drehfeldmaschine nicht in jedem Fall eine Überwachungsdrehzahl durch ein einfaches sensorloses Maschinenmodell korrekt berechnet werden. Im Fall einer Synchronmaschine ist dieser Bereich gleichbedeutend mit sehr niedrigen Drehzahlen der Drehfeldmaschine und muss folglich eventuell nicht überwacht werden, sofern es sich hierbei um einen definitionsgemäß sicheren Zustand des geregelten Antriebs handelt. Bei einer zweipoligen Asynchronmaschine hingegen können bei Statorfrequenzen um Null, abhängig von der wirksamen Strombegrenzung, noch Drehzahlen bis hin zur zwei- bis dreifachen Nennschlupffrequenz erreicht werden, ohne dass die Modelldrehzahl der Maschine mit einfachen sensorlosen Maschinenmodellen berechnet werden kann. Der Schlupffrequenzbereich, der sich bei sehr niedrigen Statorfrequenzen auf die Drehzahl auswirkt, reduziert sich in Abhängigkeit von der Polpaarzahl der Maschine. Die Folge sind unterschiedliche Güten der Systemüberwachung bei Synchronmaschinen und Asynchronmaschinen in diesem kritischen Betriebsbereich. Sofern erforderlich, kann der Betriebsbereich um Null Hertz Statorfrequenz, ähnlich wie bei sensorlosen Regelverfahren, jedoch durch Aufschalten von Testsignalen auf die Statorwicklung ebenfalls erfasst werden. Die Auslegung der Modellrechnung des Überwachungsrechners wie auch die Busübertragungsrate und Abtastfrequenz u.ä. sind dann für die Auswertung dieser Testsignale hin anzupassen.

Die Aufgabe wird auch durch eine Steuerungsvorrichtung mit Drehfeldmaschine einer mobilen Arbeitsmaschine gelöst, die eine Drehfeldmaschine, insbesondere einen Drehstrommotor, und eine Drehzahlerfassung der Drehfeldmaschine, einen steuerbaren Wechselrichter für die Speisung der Drehfeldmaschine und einen Steuerungsrechner, der mit dem Wechselrichter sowie der Drehzahlerfassung verbunden ist, sowie einen Überwachungsrechner, der mit dem Steuerungsrechner über einen Datenbus verbunden ist, umfasst, wobei der Steuerungsrechner und der Überwachungsrechner ein zuvor beschriebenes Verfahren durchführen.

Die Steuerungsvorrichtung mit Drehfeldmaschine für eine mobile Arbeitsmaschine weist die schon zuvor genannten Vorteile auf.

Weitere Vorteile und Einzelheiten der Erfindung werden anhand der in den schematischen Figuren dargestellten Ausführungsbeispiele näher erläutert. Hierbei zeigt die
- Fig. 1: schematisch in Seitenansicht eine als Gegengewichtsgabelstapler ausgeführte mobile Arbeitsmaschine mit einem elektrischen Fahrantrieb, der durch ein erfindungsgemäßes Verfahren gesteuert wird,
- Fig. 2: schematisch ein Beispiel einer Steuerung eines Antriebes nach dem Stand der Technik,
- Fig. 3: schematisch ein weiteres Beispiel einer Steuerung eines Antriebes nach dem Stand der Technik, und
- Fig. 4: schematisch eine erfindungsgemäße Steuerung eines Antriebes.

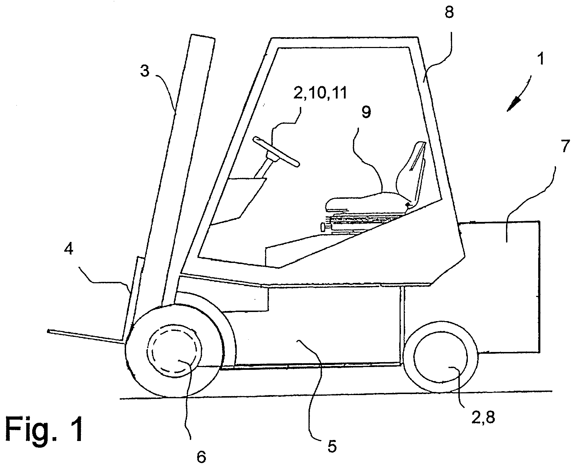

Die Fig. 1 zeigt schematisch in Seitenansicht eine als Flurförderzeug, beispielsweise als Gegengewichtsgabelstapler, ausgeführte mobile Arbeitsmaschine 1 mit einer elektrischen Lenkvorrichtung 2 als Beispiel eines Antriebs der mobilen Arbeitsmaschine 1, bei der der Antrieb eine Drehfeldmaschine aufweist und durch ein erfindungsgemäßes Verfahren gesteuert wird. An einem Hubgerüst 3 ist eine Lastgabel 4 angeordnet und an einem Rahmen 5 sind vordere Räder 6 sowie unterhalb eines Gegengewichts 7 mindestens ein gelenktes Rad 8 angeordnet, das mit einem Drehstrommotor als Drehfeldmaschine zur Einstellung des Lenkeinschlags versehen ist. In einer Fahrerkabine 8 ist ein Fahrersitz 9 und vor diesem ein Lenkgeber 10 für den elektrischen Antrieb der Lenkung angeordnet, hier in Form eines Lenkrades 11. Die vorderen Räder 6 sind über eine Achse mit einem nicht dargestellten Differential mit einem ebenfalls nicht gezeigten Drehstrommotor verbunden, der als Antrieb für den Fahrantrieb dient und ein weiteres Beispiel für einen Antrieb durch eine mit einem erfindungsgemäßen Verfahren betriebene Drehfeldmaschine bildet. Alternativ kann auch ein Drehstrommotor für jedes der vorderen Räder 6 ohne ein Differential vorgesehen sein.

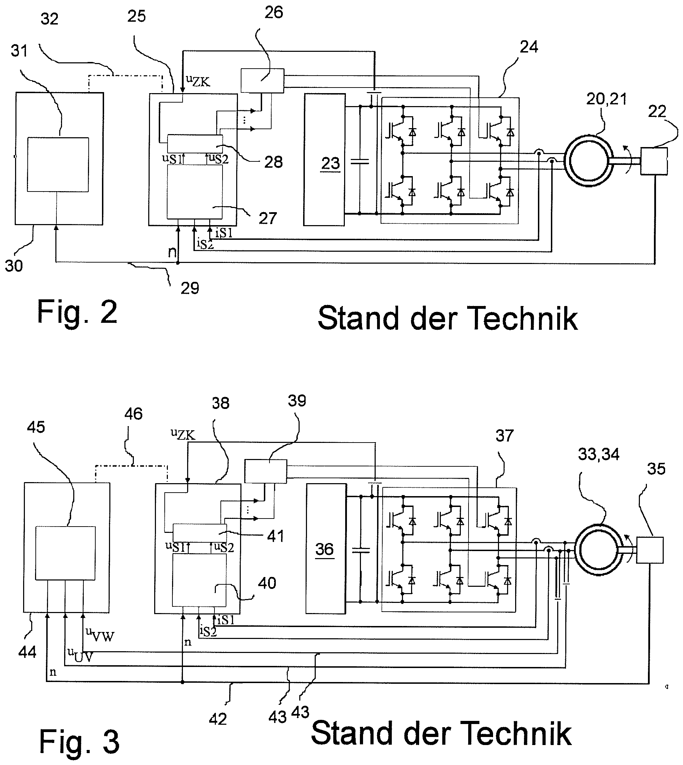

Die Fig. 2 zeigt schematisch ein Beispiel einer Steuerung eines Antriebes einer mobilen Arbeitsmaschine nach dem Stand der Technik. Ein Drehstrommotor 20 als Drehfeldmaschine 21 ist mit einem Drehzahlgeber 22 verbunden. Über eine Spannungsversorgung 23 steuert ein Wechselrichter 24 die drei Phasen der Drehfeldmaschine 21 an. Dabei erfolgt die Regelung der Drehfeldmaschine 21 durch einen Steuerungsrechner 25, der über einen Gate-Treiber 26 den Wechselrichter 24 ansteuert. Durch den regelnden Steuerungsrechner 25 werden in einem Maschinenmodell 27 feldorientierte Soll- und Istgrößen der Drehfeldmaschine 21 berechnet, die als Eingangswerte in dem vorliegenden Beispiel zwei gemessene Phasenströme i_{S1} und i_{S2} sowie ein von dem Drehzahlgeber 22 stammendes Drehgebersignal n nutzen. Zusätzlich erhält der Steuerungsrechner 25 noch eine Zwischenkreisspannung U_{ZK}, die hier der Spannung der Spannungsversorgung 23 entspricht. Die in dem vorliegenden Beispiel insgesamt sechs Leistungshalbleiter in dem Wechselrichter 24 werden durch binäre Steuersignale angesteuert, die das Ergebnis der Umrechnung von Soll-Statorspannungen sind, die nach Koordinatentransformation aus der Regelstruktur in Feldkoordinaten hervorgehen. In einer Spannungsmodulation 28 werden aus den Regelungsspannungswerten u_{S1} und u_{S2} durch Modulationsverfahren die Steuersignale erzeugt, mit denen über die Gate-Treiber 26 die Leistungshalbleiter des Wechselrichters 24 angesteuert werden. Über eine eigene Signalleitung 29 wird das Drehgebersignal n des Drehzahlgebers 22 einem Überwachungsrechner 30 zugeleitet. Der Überwachungsrechner 30 wertet das Drehgebersignal n in einem Regelungsmodell 31 aus. Der Steuerungsrechner 25 und der Überwachungsrechner 30 sowie weitere, hier nicht dargestellte Komponenten der mobilen Arbeitsmaschine, sind über ein Bussystem 32 miteinander verbunden.

Dadurch wird das Drehgebersignal n des Antriebs redundant ausgewertet. Dabei kann der Überwachungsrechner 30 anhand des Regelungsmodells 31 bestimmte Zwischengrößen des Drehzahlregelkreises, wie beispielsweise das Solldrehmoment, berechnen. Diese Zwischengrößen werden von dem Überwachungsrechner 30 mit korrespondierenden Größen des regelnden Steuerungsrechners 25 verglichen.

Die Fig. 3 zeigt schematisch ein weiteres Beispiel einer Steuerung eines Antriebes nach dem Stand der Technik. Ein Drehstrommotor 33 als Drehfeldmaschine 34 ist mit einem Drehzahlgeber 35 verbunden. Über eine Spannungsversorgung 36 steuert ein Wechselrichter 37 die drei Phasen der Drehfeldmaschine 34 an. Dabei erfolgt die Regelung der Drehfeldmaschine 34 durch einen Steuerungsrechner 38, der über einen Gate-Treiber 39 den Wechselrichter 37 ansteuert. Durch den regelnden Steuerungsrechner 38 werden in einem Maschinenmodell 40 mit feldorientierter Regelung Soll- und Istgrößen der Drehfeldmaschine 34 berechnet, die als Eingangswerte in dem vorliegenden Beispiel zwei gemessene Phasenströme i_{S1} und i_{S2} sowie ein von dem Drehzahlgeber 35 stammendes Drehgebersignal n nutzen. Zusätzlich erhält der Steuerungsrechner 38 die Spannung U_{ZK} in einem Zwischenspannungskreis. Die in dem vorliegenden Beispiel insgesamt sechs Leistungshalbleiter in dem Wechselrichter 37 werden durch binäre Steuersignale angesteuert, die in einer Spannungsmodulation 41 aus den Regelungsspannungswerten u_{S1} und u_{S2} gebildet werden. Die Leistungshalbleiter des Wechselrichters 37 werden durch diese Steuersignale über den Gate-Treiber 39 angesteuert. Eine eigene Signalleitung 42 für das Drehgebersignal n leitet das Drehgebersignal n des Drehzahlgebers 35 einem Überwachungsrechner 44 zu. Weitere Signalleitungen 43 leiten dem Überwachungsrechner 44 Statorspannungssignale uᵤᵥ und u_{vw} zu. Der Überwachungsrechner 44 wertet diese als Eingangswerte zugeleiteten Signale n, uᵤᵥ und u_{vw} in einem Maschinen- und Regelungsmodell 45 aus. Der Steuerungsrechner 38 und der Überwachungsrechner 45 sowie weitere, hier nicht dargestellte Komponenten der mobilen Arbeitsmaschine sind über ein Bussystem 46 miteinander verbunden.

Da bei dieser bekannten Lösung zur Regelungsüberwachung der Überwachungsrechner 44 zusätzlich Statorspannungssignale uᵤᵥ und u_{vw} auswertet und in dem Maschinen- und Regelungsmodell 45, das die Drehfeldmaschine 34 beschreibt, berücksichtigt, können durch den Überwachungsrechner 44 neben den Regelgrößen, wie etwa der Drehzahl n, auch Modell-Maschinengrößen des Antriebs berechnet werden.

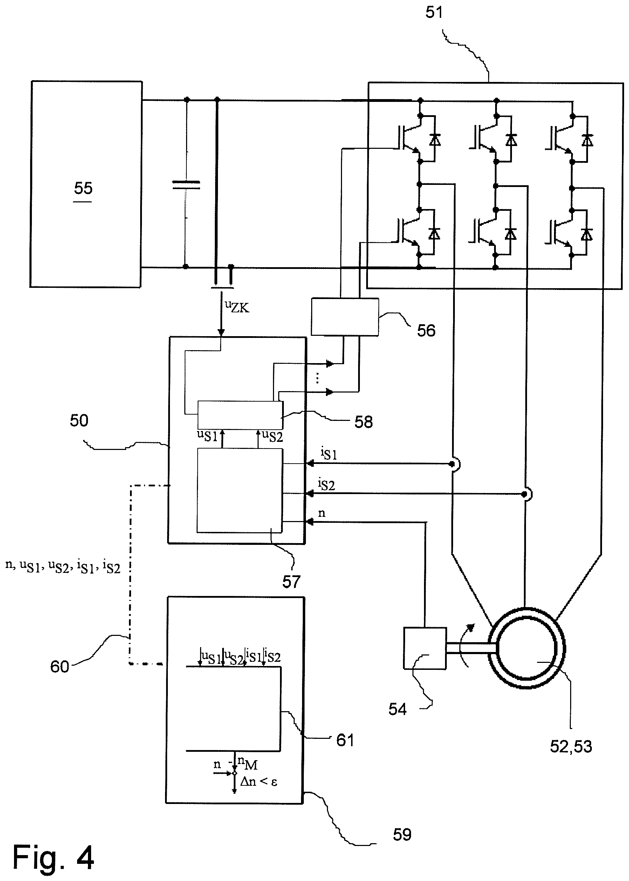

Die Fig. 4 zeigt schematisch eine erfindungsgemäße Steuerung eines Antriebes als Darstellung in Form eines Blockschaltbilds. Ein Steuerungsrechner 50, der oft in unmittelbarer Umgebung eines zu steuernden Wechselrichters 51, hier eines Pulswechselrichters, mit dessen Leistungselektronik angeordnet ist, wertet mittels Hardware-Schaltungen mindestens zwei Phasenströme i_{S1} und i_{S2} des durch den Wechselrichter 51 gespeisten Drehstrommotors 52 bzw. der Drehfeldmaschine 53, ein Drehgebersignal n eines Drehzahlsensors 54 und die Zwischenkreisspannung U_{ZK} aus, die von einer Spannungsversorgung 55 gespeist wird. Über Gate-Treiber 56 werden Leistungstransistoren der Halbbrückenschaltungen des Wechselrichters 51 angesteuert. Durch den Steuerungsrechner 50 werden feldorientierte Soll- und Istgrößen der Maschine mittels eines Maschinenmodells 57 mit feldorientierter Regelung berechnet, das als Eingangswerte die zwei gemessene Phasenströme i_{S1} und i_{S2} sowie das Drehgebersignal n nutzt. Die binären Steuersignale der Leistungshalbleiter des Wechselrichters 51 sind Ergebnis der Umrechnung von Soll-Statorspannungen u_{S1}, u_{S2}, die nach Koordinatentransformation aus der Regelstruktur in Feldkoordinaten hervorgehen. Dazu werden Modulationsverfahren in einer Spannungsmodulation 58 in dem Steuerungsrechner 50 eingesetzt. Direkt anhand der Regelstruktur oder indirekt mittels der modulierten Steuersignale des Gate-Treibers 56 des Wechselrichters 51 und der gemessenen Zwischenkreisspannung U_{ZK} können die auf die Statorwicklung aufgeschalteten Phasenspannungen der Drehfeldmaschine 53 berechnet werden. Alternativ ist es auch möglich, diese Werte durch Sensoren zu messen.

Im Falle von erhöhten Genauigkeitsanforderungen an die Statorspannungsberechnung ist es zusätzlich möglich, den durch Totzeiten in dem Gate-Treiber 56 sowie das nichtideale Schalt- und Durchlassverhalten der Leistungshalbleiter des Wechselrichters 51 u.ä. entstehenden Spannungsfehler des Wechselrichters 51 zu kompensieren. Dazu wird das nichtlinearen Übertragungsverhaltens des Wechselrichters 51 zuvor geprüft und es werden kompensierte Phasenspannungssollwerte berechnet, die sehr gute Näherungen darstellen für die sich tatsächlich einstellenden Statorspannungs-Grundschwingungen. Diese Werte können dann als Eingangswerte sensorloser Maschinenmodelle genutzt werden.

Ein Überwachungsrechner 59 erhält die Eingangswerte eines sensorlosen feldorientierten Maschinenmodells 61, das in dem Überwachungsrechner 59 berechnet wird. Dies sind in dem Fall eines dreiphasigen Drehstrommotors 52 als Drehfeldmaschine 53 zwei Phasenspannungen u_{S1},u_{S2} und zwei Phasenströme i_{S1},i_{S2} sowie das Drehgebersignal n eines Drehzahlsensors 54, die als Eingangswerte über einen Bus 60 durch Steuerungsrechner 50 zur Verfügung gestellt werden. Die Abtastrate dieser Eingangswerte kann niedriger als beim Steuerungsrechner 50 sein, da an die Berechnung des feldorientierten Maschinenmodells 61 nicht so hohe Dynamikanforderungen gestellt werden müssen, wie an das feldorientiertes Modell 57 des Steuerungsrechners 50 für die Regelung. Durch das feldorientierte Maschinenmodell 61 des Überwachungsrechners 59 wird eine Überwachungsdrehzahl n_{M} als Modelldrehzahl des Antriebs berechnet. Diese wird mit dem gemessenen und vom Bus 60 übertragenen tatsächlichen Drehgebersignal n verglichen. Liegt die Differenz von Drehgebersignal n und Überwachungsdrehzahl n_{M} innerhalb eines Toleranzbereichs <ε, funktioniert die Drehzahlregelung ordnungsgemäß. Betriebsstörungen im Drehzahlregelkreis und in der Überwachung, die auf Sensorfehlern, Auswertefehlern, Fehlern in den Übertragungsstrecken des Bus 60, Fehlern der Signalleitungen oder auf Berechnungsfehler aufgrund von Hard- oder Software-Fehlfunktionen des Steuerungsrechners 50 oder des Überwachungsrechners 59 beruhen, führen zu einer Abweichung des Drehgebersignal n und der Überwachungsdrehzahl über den Toleranzbereich hinaus, da sich die Strukturen der beiden Maschinenmodelle unterscheiden. Durch das erfindungsgemäße Verfahren wird daher eine Prinzip-redundante Überwachung verwirklicht. In dem vorliegenden Ausführungsbeispiel ist ein Verfahren zur Steuerung mit einer solchen Überwachung bei dem Lenkantrieb und/oder dem Fahrantrieb des Gegengewichtsgabelstaplers der Fig. 1 verwirklicht.

Vorteilhaft sind keine Signalleitungen für die Eingangswerte erforderlich. Auch kann durch die Übertragung der Eingangswerte u_{S1},u_{S2}, i_{S1},i_{S2} und n über den Bus 60 als Überwachungsrechner 59 jeder zur Verfügung stehende Microcontroller mit noch ausreichender freier Rechenkapazität, der mit dem Bus 60 verbunden ist, genutzt werden. Dies kann z.B. das Steuergerät einer weiteren Komponente der mobilen Arbeitsmaschine sein.

Das erfindungsgemäße Verfahren kann auch bei bürstenlosen Gleichstrommaschinen eingesetzt werden. Das erfindungsgemäße Verfahren kann auf alle drehzahlgeregelten elektrischen Antriebe bei mobilen Arbeitsmaschinen angewandt werden.

## Patentansprüche

1. Verfahren zur Steuerung einer Drehfeldmaschine (53) einer mobilen Arbeitsmaschine (1), mit einer Drehfeldmaschine (53), insbesondere einem Drehstrommotor (52), und einer Drehzahlerfassung der Drehfeldmaschine (53), einem steuerbaren Wechselrichter (51) für die Speisung der Drehfeldmaschine (53) und mit einem Steuerungsrechner (50), der mit dem Wechselrichter (51) sowie der Drehzahlerfassung verbunden ist, wobei ein Überwachungsrechner (59), der mit dem Steuerungsrechner (50) über einen Datenbus (60) verbunden ist, als berechneten Überwachungswert zumindest eine Überwachungsdrehzahl (n_{M}) der Drehfeldmaschine (53) mittels einer Modellrechnung (61) aus an den Überwachungsrechner (59) übermittelten Eingangswerten (u_{S1},u_{S2}, i_{S1},i_{S2}) bestimmt,
**dadurch gekennzeichnet,**
**dass** der Überwachungsrechner (59) Eingangswerte (u_{S1},u_{S2}, i_{S1},i_{S2}, n) über den Datenbus (60) allein als Dateninformation von dem Steuerungsrechner (50) erhält und berechnete Überwachungswerte (n_{M}) mit über den Datenbus (60) übermittelten Eingangswerten (n) vergleicht, wobei der Steuerungsrechner und der Überwachungsrechner in verschiedenen Kernen eines Mehrkemprozessors umgesetzt sind sowie der Bus ein CPU-Bus ist oder wobei der Überwachungsrechner (59) zugleich ein Steuerungsrechner (50) einer weiteren Komponente der mobilen Arbeitsmaschine (1) oder des Wechselrichters ist.

2. Verfahren nach Anspruch 1,
**dadurch gekennzeichnet,**
**dass** der Datenbus (60) ein Feldbus, insbesondere ein CAN-Bus ist.

3. Verfahren nach Anspruch 1 oder 2,
**dadurch gekennzeichnet,**
**dass** die Drehzahlerfassung aus einem die Drehzahl (n) der Drehfeldmaschine (53) erfassenden Drehzahlsensor (54) besteht.

4. Verfahren nach einem der Ansprüche 1 bis 3,
**dadurch gekennzeichnet,**
**dass** die Drehzahlerfassung aus dem Steuerungsrechner besteht, der die Drehzahl der Drehfeldmaschine anhand eines sensorlosen Regelungsmodels bestimmt und als Eingangswert an den Überwachungsrechner übermittelt.

5. Verfahren nach einem der Ansprüche 1 bis 4,
**dadurch gekennzeichnet,**
**dass** die Eingangswerte Statorströme (i_{S1},i_{S2}) der Drehfeldmaschine (53) umfassen, insbesondere die Statorströme (i_{S1},i_{S2}) von zwei von drei Phasen der Drehfeldmaschine (53).

6. Verfahren nach einem der Ansprüche 1 bis 5,
**dadurch gekennzeichnet,**
**dass** als Eingangswerte Statorspannungen der Drehfeldmaschine (53) verwendet werden, die aus einem oder mehreren Statorspannungssensoren bestimmt werden.

7. Verfahren nach einem der Ansprüche 1 bis 6,
**dadurch gekennzeichnet,**
**dass** als Eingangswerte Statorspannungen (u_{S1},u_{S2}) der Drehfeldmaschine (53) verwendet werden, die aus einem Messwert eines Spannungssensors für die Eingangsspannung (U_{ZK}) des Wechselrichters (51) berechnet werden.

8. Verfahren nach einem der Ansprüche 1 bis 7,
**dadurch gekennzeichnet,**
**dass** die Drehfeldmaschine (53) ein Asynchron-Drehstrommotor ist.

9. Verfahren nach einem der Ansprüche 1 bis 8,
**dadurch gekennzeichnet,**
**dass** der Steuerungsrechner (50) eine feldorientierte Regelung (57) der Drehfeldmaschine durchführt.

10. Verfahren nach einem der Ansprüche 1 bis 9
**dadurch gekennzeichnet,**
**dass** der Überwachungsrechner (59) als Modellrechnung das Modell (61) einer feldorientierten Regelung der Drehfeldmaschine nutzt.

11. Verfahren nach einem der Ansprüche 1 bis 10,
**dadurch gekennzeichnet,**
**dass** zumindest ein Teil der Eingangswerte (u_{S1},u_{S2}, i_{S1},i_{S2}, n) des Überwachungsrechners eine geringere Abtastrate hat, als entsprechende Werte für den Steuerungsrechner.

12. Verfahren nach einem der Ansprüche 1 bis 11,
**dadurch gekennzeichnet,**
**dass** in einem Drehzahlbereich nahe Null Testsignale auf die Statorwicklungen aufgeschaltet werden, insbesondere bei einer zweipoligen Asynchrondrehstrommaschine als Drehfeldmaschine.

13. Steuerungsvorrichtung mit Drehfeldmaschine (53) einer mobilen Arbeitsmaschine (1), mit einer Drehfeldmaschine (53), insbesondere einem Drehstrommotor (52), und einer Drehzahlerfassung der Drehfeldmaschine (53), einem steuerbaren Wechselrichter (51) für die Speisung der Drehfeldmaschine (53) und mit einem Steuerungsrechner (50), der mit dem Wechselrichter (51) sowie der Drehzahlerfassung verbunden ist, sowie mit einem Überwachungsrechner (59), der mit dem Steuerungsrechner (50) über einen Datenbus (60) verbunden ist, wobei der Steuerungsrechner (50) und der Überwachungsrechner (59) ein Verfahren nach einem der Ansprüche 1 bis 12 durchführen.

## Claims

1. Method for controlling a rotating field machine (53) of a mobile working machine (1) having a rotating field machine (53), in particular a three-phase motor (52), and a speed recording means of the rotating field machine (53), a controllable inverter (51) for supplying the rotating field machine (53) and having a control computer (50) which is connected to the inverter (51) and to the speed recording means, a monitoring computer (59) which is connected to the control computer (50) via a data bus (60) determining, as a calculated monitoring value, at least one monitoring speed (n_{M}) of the rotating field machine (53) by means of a model calculation (61) from input values (u_{S1}, u_{S2}, i_{S1}, i_{S2}) transmitted to the monitoring computer (59),
**characterized**
**in that** the monitoring computer (59) receives input values (u_{S1}, u_{S2}, i_{S1}, i_{S2}, n) from the control computer (50) solely as data information via the data bus (60) and compares calculated monitoring values (n_{M}) with input values (n) transmitted via the data bus (60), the control computer and the monitoring computer being implemented in different cores of a multi-core processor and the bus being a CPU bus, or the monitoring computer (59) simultaneously being a control computer (50) of a further component of the mobile working machine (1) or of the inverter.

2. Method according to Claim 1,
**characterized**
**in that** the data bus (60) is a field bus, in particular a CAN bus.

3. Method according to Claim 1 or 2,
**characterized**
**in that** the speed recording means consists of a speed sensor (54) recording the speed (n) of the rotating field machine (53).

4. Method according to one of Claims 1 to 3,
**characterized**
**in that** the speed recording means consists of the control computer which determines the speed of the rotating field machine on the basis of a sensorless regulating model and transmits it to the monitoring computer as an input value.

5. Method according to one of Claims 1 to 4,
**characterized**
**in that** the input values comprise stator currents (i_{S1}, i_{S2}) of the rotating field machine (53), in particular the stator currents (i_{S1}, i_{S2}) of two of three phases of the rotating field machine (53).

6. Method according to one of Claims 1 to 5,
**characterized**
**in that** stator voltages of the rotating field machine (53), which are determined from one or more stator voltage sensors, are used as input values.

7. Method according to one of Claims 1 to 6,
**characterized**
**in that** stator voltages (u_{S1}, u_{S2}) of the rotating field machine (53), which are calculated from a measured value from a voltage sensor for the input voltage (U_{ZK}) of the inverter (51), are used as input values.

8. Method according to one of Claims 1 to 7,
**characterized**
**in that** the rotating field machine (53) is an asynchronous three-phase motor.

9. Method according to one of Claims 1 to 8,
**characterized**
**in that** the control computer (50) carries out field-oriented regulation (57) of the rotating field machine.

10. Method according to one of Claims 1 to 9,
**characterized**
**in that** the monitoring computer (59) uses the model (61) of field-oriented regulation of the rotating field machine as the model calculation.

11. Method according to one of Claims 1 to 10,
**characterized**
**in that** at least some of the input values (u_{S1}, u_{S2}, i_{S1}, i_{S2}, n) of the monitoring computer have a lower sampling rate than corresponding values for the control computer.

12. Method according to one of Claims 1 to 11,
**characterized**
**in that**, in a speed range close to zero, test signals are applied to the stator windings, in particular in the case of a two-pole asynchronous three-phase machine as the rotating field machine.

13. Control apparatus having a rotating field machine (53) of a mobile working machine (1) having a rotating field machine (53), in particular a three-phase motor (52), and a speed recording means of the rotating field machine (53), a controllable inverter (51) for supplying the rotating field machine (53) and having a control computer (50) which is connected to the inverter (51) and to the speed recording means, and having a monitoring computer (59) which is connected to the control computer (50) via a data bus (60), the control computer (50) and the monitoring computer (59) carrying out a method according to one of Claims 1 to 12.

## Revendications

1. Procédé de commande d'une machine à champ tournant (53) d'une machine de travail (1) mobile, avec une machine à champ tournant (53), en particulier une moteur triphasé (52), et une détection de la vitesse de rotation de la machine à champ tournant (53), un onduleur (51) pouvant être commandé pour l'alimentation de la machine à champ tournant (53), et avec un ordinateur de commande (50) qui est raccordé à l'onduleur (51) ainsi qu'à la détection de la vitesse de rotation, un ordinateur de surveillance (59), qui est raccordé à l'ordinateur de commande (50) par le bilais d'un bus de données (60), définissait, en tant que valeur de surveillance calculée, au moins une vitesse de rotation de surveillance (n_{M}) de La machine à champ tournant (53) au moyen d'un calcul de modélisation (61) à partir de valeurs d'entrée (u_{S1}, u_{S2}, i_{S1}, i_{S2}) transmises à l'ordinateur de surveillance (59),
**caractérisé en ce que**
l'ordinateur de surveillance (59) reçoit de l'ordinateur de commande (50) des valeurs d'entrée (u_{S1}, u_{S2}, i_{S1}, i_{S2}, n) par le bilais du bus de données (60) uniquement en tant qu'information de données et compare des valeurs de surveillance (n_{M}) calculées avec des valeurs d'entrée (n) transmises par le biais du bus de données (60), l'ordinateur de commande et l'ordinateur de surveillance étant transformés en différents coeurs d'un processeur multi-coeur, et le bus étant un bus CPU ou l'ordinateur de surveillance (59) étant en même temps un ordinateur de commande (50) d'une autre composante de la machine de travail (1) mobile ou de l'onduleur.

2. Procédé selon la revendication 1,
**caractérisé en ce que**
le bus de données (60) est un bus de terrain, en particulier un bus CAN.

3. Procédé selon la revendication 1 ou 2,
**caractérisé en ce que**
la détection de la vitesse de rotation se compose d'un capteur de vitesse de rotation (54) détectant la vitesse de rotation (n) de la machine à champ tournant (53).

4. Procédé selon l'une des revendications 1 à 3,
**caractérisé en ce que**
la détection de la vitesse de rotation se compose de l'ordinateur de commande qui définit la vitesse de rotation de la machine à champ tournant à l'aide d'un modèle de régulation sans capteur et la transmet en tant que valeur d'entrée à l'ordinateur de surveillance.

5. Procédé selon l'une des revendications 1 à 4,
**caractérisé en ce que**
les valeurs d'entrée comprennent des courants de stator (i_{S1}, i_{S2}) de la machine à champ tournant (53), en particulier les courants de stator (i_{S1}, i_{S2}) de deux de trois phases de la machine à champ tournant (53).

6. Procédé selon l'une des revendications 1 à 5,
**caractérisé en ce que**,
en tant que valeurs d'entrée, il est utilisé des tensions de stator de la machine la champ tournant (53) qui sont définies à partir d'un ou de plusieurs capteurs de tension de stator.

7. Procédé selon l'une des revendications 1 à 6,
**caractérisé en ce que**
en tant que valeurs d'entrée, il est utilisé des tensions de stator (u_{S1}, u_{S2}) de la machine à champ tournant (53) qui sont calculées à partir d'une valeur de mesure d'un capteur de tension pour la tension d'entrée (U_{ZK}) de l'onduleur (51).

8. Procédé selon l'une des revendications 1 à 7,
**caractérisé en ce que**
la machine à champ tournant (53) est un moteur triphasé asynchrone.

9. Procédé selon l'une des revendications 1 à 8,
**caractérisé en ce que**
l'ordinateur de commande (50) effectue une régulation (57) orientée champ de la machine à champ tournant.

10. Procédé selon l'une des revendications 1 à 9,
**caractérisé en ce que**
l'ordinateur de surveillance (59) utilise comme calcul de modélisation le modèle (61) d'une régulation orientée champ de la machine à champ tournant.

11. Procédé selon l'une des revendications 1 à 10,
**caractérisé en ce**
**qu'**au moins une partie des valeurs d'entrée (u_{S1}, u_{S2}, i_{S1}, i_{S2}, n) de l'ordinateur de surveillance a une fréquence d'échantillonnage plus faible que des valeurs correspondantes pour l'ordinateur de commande.

12. Procédé selon l'une des revendications 1 à 11,
**caractérisé en ce que**
dans une plage de vitesse de rotation proche de zéro, des signaux de test sont appliqués aux enroulements de stator, en particulier en présence d'une machine triphasée asynchrone à deux pôles en tant que machine à champ tournant.

13. Dispositif de commande avec machine à champ tournant (53) d'une machine de travail (1) mobile, avec une machine à champ tournant (53), en particulier un moteur triphasé (52), et avec une détection de la vitesse de rotation de la machine à champ tournant (53), un onduleur (51) pouvant être commande pour l'alimentation de la machine à champ tournant (53) et avec un ordinateur de commande (50) qui est raccordé à l'onduleur (51) ainsi qu'à la détection de la vitesse de rotation, ainsi qu'avec un ordinateur de surveillance (59) qui est raccordé à l'ordinateur de commande (50) par le bilais d'un bus de données (60), l'ordinateur de commande (50) et l'ordinateur de surveillance (59) effectuant un procédé selon l'une des revendications 1 à 12.
